# EUROPÄISCHE PATENTSCHRIFT

(11) **EP 3 086 088 B1**
(45) Veröffentlichungstag und Bekanntmachung des Hinweises auf die Patenterteilung: **09.01.2019**
(21) Anmeldenummer: 15164598.3
(22) Anmeldetag: 22.04.2015
(51) Int. Cl.: G01C 15/00, F16C 19/16, G01S 17/66, G01S 7/481, F16C 19/54

(54) **SCANNENDES VERMESSUNGSGERÄT MIT THERMISCH NEUTRALER ACHSE**
SCANNING MEASURING DEVICE WITH THERMALLY NEUTRAL AXIS
APPAREIL DE MESURE À BALAYAGE DOTÉ D'UN AXE NEUTRE THERMIQUEMENT

(43) Veröffentlichungstag der Anmeldung: 26.10.2016
(73) Patentinhaber: Leica Geosystems AG, 9435 Heerbrugg (CH)
(72) Erfinder: Bereuter, Klaus, A-6861 Alberschwende (AT); Plangger, Karl Helmut, A-6850 Dornbirn (AT)
(74) Vertreter: Kaminski Harmann

(56) Entgegenhaltungen:
- EP-A1- 2 607 843
- US-A1- 2013 308 117

## Beschreibung

Die Erfindung betrifft ein scannendes Vermessungsgerät nach dem Oberbegriff des Anspruchs 1.

Zur Erfassung von Objekten oder Oberflächen werden häufig Verfahren verwendet, welche die Topographie einer Struktur, wie z.B. eines Bauwerks, sukzessive abtasten und dabei aufnehmen. Eine solche Topographie stellt dabei eine zusammenhängende und die Oberfläche des Objekts beschreibende Folge von Punkten oder aber ein entsprechendes Modell oder eine Beschreibung der Oberfläche dar. Ein gängiger Ansatz ist das Abtasten mittels eines Laserscanners, der jeweils die räumliche Position eines Oberflächenpunktes erfasst, indem durch den Laser die Entfernung zum angezielten Oberflächenpunkt gemessen und diese Messung mit den Winkelinformationen der Laseremission verknüpft werden. Aus diesen Entfernungs- und Winkelinformationen kann die räumliche Lage des jeweils erfassten Punktes bestimmt und die Oberfläche fortlaufend vermessen werden. In vielen Fällen wird parallel zu dieser rein geometrischen Erfassung der Oberfläche auch noch eine Bildaufnahme durch eine Kamera durchgeführt, welche neben der visuellen Gesamtansicht auch weitere Informationen, z.B. bzgl. der Oberflächentextur, bereitstellt.

Auch andere Vermessungsgeräte wie Profiler, Totalstationen, oder Lasertracker eignen sich in der Regel ebenfalls für derartige Scanning-Vorgänge, wobei dies meist über koaxiale Distanzmesselemente oder Scanelemente sowie Rechen-, Steuer- und Speichereinheiten in dem jeweiligen Gerät realisiert wird. Abhängig von der Ausbaustufe des Vermessungsgerätes kann zudem eine Motorisierung z.B. einer Anziel- bzw. Visiereinrichtung sowie - im Fall der Verwendung von Retroreflektoren (etwa eines Rundum-Prismas) als Ziel-Objekte - als Mittel zur automatischen Zielsuche und -verfolgung integriert sein.

Scannende Vermessungsgeräte nach dem Stand der Technik befähigen einen Benutzer grosse Oberflächen und Objekte mit einem relativ geringen Zeitaufwand - in Abhängigkeit einer gewünschten Punkt-Zu-Punkt-Auflösung - vollständig und gegebenenfalls mit zusätzlichen Objektinformationen zu erfassen. Die Geräte sind dabei typischerweise derart ausgestaltet, dass primär Punktwolken mit einer grossen Anzahl von Messpunkten erfasst werden können und dieses Erfassen mit einer hinreichenden Genauigkeit erfolgt.

Hierzu wird ein sehr schnell rotierender Laserstrahl in die Umgebung ausgesandt und das reflektierte Lichtsignal entsprechend frequentiert ausgewertet. Üblicherweise rotiert dieser "abtastende" Laserstrahl um eine schnelle Achse und um eine (zur ersten Achse orthogonale) langsame Achse, wodurch eine Abtastung in alle Raumwinkel möglich ist. Insbesondere die schnell drehende Achse bedarf aufgrund der hohen Drehzahlen einer robusten und exakten Lagerung. Die Präzision muss dabei über einen längeren Zeitraum und über weite Temperaturbereiche konstant bleiben.

Die EP 2 607 843 und die US 2013/0308117 zeigt eine gattungsgemässe Messvorrichtung, d.h. einen Lasertracker, welche einen ähnlichen Aufbau wie das Vermessungsgerät gemäss der vorliegenden Erfindung hat. Mit solchen Geräten werden ebenfalls Punktkoordinaten vermessen, wozu ein Messstrahlgang um eine vertikale Stehachse und eine horizontale Kippachse verschwenkt werden kann. Für diese Rotationen werden in den beiden Dokumenten Wälzlager in Fest-Los-Anordnung gezeigt.

Bisherige Totalstationen werden hinsichtlich der Elevationsachse mit einer Gleitlagerung betrieben. In bisherigen Laserscannern kommt üblicherweise eine konventionelle Fest-Los-Lagerung zur Anwendung, welche eine konstante Vorspannung allenfalls dadurch gewährleisten kann, dass zusätzliche Elemente, wie z.B. Federn, Dichtungsringe und weitere elastische Körper, als integraler Bestandteil der Lagerung mit verbaut werden. Durch diese Zusatzelemente wird das Loslager bei thermisch bedingter Ausdehnung des Lagersystems so in Stellung gehalten, dass die Lagerung nicht verspannt. Diese konventionellen Lagerungen sind aufwändig in Planung und Konstruktion, benötigen mehr Teile und Bauraum und bieten keine optimale Steifigkeit.

Die Änderung der Vorspannung innerhalb eines Betriebstemperaturbereiches ist unerwünscht, da bei einer Vergrösserung des Lagerspiels die Vermessungsergebnisse ungenau werden und da bei einer zu hohen Lagervorspannung die erhöhte Reibung zu grösserem Energiebedarf führt, was insbesondere für batteriebetriebene mobile Vermessungsgeräte mit begrenzter Energiekapazität kritisch ist.

Eine Aufgabe der vorliegenden Erfindung besteht daher darin, ein diesbezüglich verbessertes Vermessungsgerät bereitzustellen.

Weitere Aufgaben bestehen in der Bereitstellung eines Vermessungsgerätes mit weniger Bauteilen und dadurch geringerem Gewicht, mit erhöhter Feldtauglichkeit sowie insbesondere grösserer Robustheit, geringerem Verschleiss und höherer Genauigkeit.

Diese Aufgaben werden durch die Verwirklichung der kennzeichnenden Merkmale des unabhängigen Anspruches gelöst. Merkmale, die die Erfindung in alternativer oder vorteilhafter Weise weiterbilden, sind den abhängigen Patentansprüchen zu entnehmen.

Die erfinderische Lösung basiert auf der Auslegung des Vermessungsgerätes mit mindestens einer thermisch neutralen Achse. Diese wird durch eine starr vorgespannte Stützlagerung in O-Anordnung realisiert. Derartige Lagerungen sind durch wenigstens zwei gegeneinander verspannte Schrägwälzlager (z.B. Schrägkugellager, Kegelrollenlager oder Schulterkugellager) charakterisiert, die demnach kein oder nur geringes axiales und radiales Spiel zulassen. Ihre generellen Vorteile sind u.a. eine höhere Steifigkeit bei radialen und axialen Belastungen, eine grössere Belastbarkeit, geringeres Kippspiel und geringere Anfälligkeit für Wärmeausdehnungen. Zudem ist das Lagerpaar so aufeinander abgestimmt, dass eine thermische Ausdehnung der an der Lagerung beteiligten Komponenten infolge des Betriebes oder infolge einer Temperaturänderung der Umgebung nicht zu einer Änderung der Vorspannung führt, sondern diesbezüglich ein kompensatorisches Verhalten aufweist.

Trotz des Fest-fest-Lagerprinzips ist also die einmal eingestellte Lagervorspannung über einen sehr weiten Temperaturbereich (zwischen sehr tiefen Minusgraden bis zu sehr hohen Temperaturen) konstant und damit thermisch neutral. Ein einmal erreichter und gehaltener Drehwinkel des Rotors kann daher eine konstante Präzision bezüglich der Position gewährleisten. Auch folgt aus der erfindungsgemässen Lagerung gegenüber einer konventionellen Lagerung, dass der Rotor zur konstanteren Aufnahme von Leistung über einen weiten Temperaturbereich fähig ist und präziser positionierbar ist.

Die Vorspannung der Lagerung der Rotationsachse ist definiert durch die Abmessungen der montierten Bauteile, wobei eine Federvorspannung nicht nötig ist. So kann beispielsweise die Vorspannung durch ein Verkleben oder durch ein Verklemmen der Lagerringe z.B. mittels Überwurfmuttern "eingefroren" werden. Durch diese Massnahmen wird der Lagerabstand fixiert.

Die Position eines Antriebs für die Achse bzw. Welle ist beliebig, kann also beispielsweise zwischen den miteinander verspannten Schrägwälzlagern oder an einem Ende der Welle platziert werden.

Die Schrägwälzlager sind so von einander beabstandet positioniert, dass sich thermische Ausdehnungen in axialer und radialer Richtung kompensieren, d.h. in einem ihrem Abstand und ihren Dimensionen entsprechenden Verhältnis ausdehnen, sodass die Vorspannung des Systems sich nicht ändert. Dies wird möglich durch die O-Anordnung der Schrägwälzlager. Der Druckwinkel bleibt während der Ausdehnung bzw. Schrumpfung des Systems konstant.

Bei einem Schrägkugellager verläuft unter einem Druckwinkel die Drucklinie (im Axialschnitt) durch die beiden Berührpunkte des Wälzkörpers mit den Lagerringen (innen/aussen). Bei einem Kegelrollenlager sind diese Drucklinien senkrecht zur Mittelachse der Wälzkörper (Kegelrollen). Verlängert man diese Drucklinien in Richtung Rotationsachse, so treffen sich diese im sogenannten Druckmittelpunkt genau auf der Rotationsachse. Der Abstand der Druckmittelpunkte (der beiden zugeordneten, O-angeordneten Lager) definiert die Stützbasis, die umso weniger Kippspiel zulässt, je grösser sie ist.

Verlängert man analog, zum Beispiel bei einem Kegelrollenlager, die Aussenringlaufbahnen zeichnerisch in Richtung Rotationsachse, treffen sich diese Linien ebenfalls auf der Rotationsachse, jedoch in der entgegengesetzten Richtung (im Vergleich zu den Drucklinien). Auch Linien, die von der Mittelachse der Kegelrollen ausgehen (sowie auch Linien, die von der Laufbahn der Kegelrolle am Lagerinnenring ausgehen), werden sich in diesem Punkt auf der Rotationsachse treffen. Diese jedoch (verlängerte Mittelachse der im Umlauf befindlichen Kegelrollen) steht genau senkrecht zur Drucklinie des jeweiligen Kegelrollenlagers. Diese sich in einem Punkt treffenden Linien eines jeweiligen Lagers seien als Wälzlinien zu verstehen.

Treffen Wälzlinien zweier in O-Anordnung verbauter und damit einander zugeordneter Kegelrollenlager in einem Punkt auf der Rotationsachse aufeinander, so gleichen sich (ggf. unter weiteren Voraussetzungen) bekanntermassen radiales und axiales Spiel aus, sodass die Vorspannung erhalten bleibt.

In ähnlicher Weise kann dieser Effekt auch mit Schrägkugellagern erreicht werden, nämlich dann, wenn der Treffpunkt von Wälzlinien einander zugeordneter Schrägkugellager, radial betrachtet, im Wesentlichen auf der Rotationsachse liegt. Dies bedeutet, dass der Treffpunkt der Wälzlinien einen Abstand zur Rotationsachse aufweist, der höchstens 10%, insbesondere höchstens 5% des Lagerabstandes entspricht.

Diese Wälzlinien stehen im rechten Winkel zu den Drucklinien des jeweiligen Lagers und verlaufen durch den Wälzkörper (Kugel), d.h. beispielsweise durch den Kugelmittelpunkt, durch den Kontaktbereich der Kugel am Lagerinnenring oder durch den Kontaktbereich der Kugel am Lageraussenring.

Sind die Schrägkugellager stark vorgespannt, so ist es möglich, dass die als Verbindungslinie der beiden Berührpunkte der Lagerkugel mit den Lagerringen definierte Drucklinie nicht mehr durch den Kugelmittelpunkt verläuft. Die Kraftflusslinien müssen aber mechanisch bedingt vom Lagerring in Richtung des Kugelmittelpunktes verlaufen; nur aufgrund der Reibung wird das Kräftegleichgewicht gehalten. In diesem Fall (vorgespannter Zustand) kann es im Gegensatz zum entspannten Zustand vorkommen, dass die Drucklinie im Kugelmittelpunkt einen minimalen Knick erfährt, wodurch die vorher definierten Wälzlinien teilweise nicht mehr parallel zu einander verlaufen.

Bei thermisch bedingter Ausdehnung der Welle, der Lagerringe, der Wälzkörper sowie des Gehäuses wandern die Lager axial betrachtet auseinander und weiten sich radial aus. Die Wälzlinientreffpunkte der einander zugeordneten und in O-Anordnung angestellten Schrägkugellager jedoch verharren dank des kompensatorischen Ausdehnungsverhaltens an einem ortsfesten Punkt auf der Welle (auf der Rotationsachse). Dadurch bleiben die Vorspannungskräfte und die Kraftflussverhältnisse konstant.

Die erfindungsgemässe Vorrichtung wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen
- Fig. 1:: ein Ausführungsbeispiel eines erfindungsgemässen Vermessungsgerätes als Laserscanner;
- Fig. 2:: die Lagerung der schnellen Rotationsachse des erfindungsgemässen Laserscanners in detaillierter Schnittdarstellung;
- Fig. 3:: ein weiteres Ausführungsbeispiel eines erfindungsgemässen Vermessungsgerätes als scannende Totalstation;
- Fig. 4a-c:: Druckwinkel und dazu im Verhältnis stehende Wälzlinien an einem Schrägkugellager;
- Fig. 5a-b:: Treffpunkte der Wälzlinien der einander zugeordneten und in O-Stellung angeordneten Schrägkugellager, sowie deren Abstand zur Rotationsachse;
- Fig. 6a-b:: thermisch bedingtes Ausdehnungsverhalten des Lagersystems und konstante sowie sich dabei ändernde Masse;
- Fig. 7:: ein weiteres Ausführungsbeispiel der erfindungsgemässen Lagerung;
- Fig. 8:: ein weiteres Ausführungsbeispiel der erfindungsgemässen Lagerung;

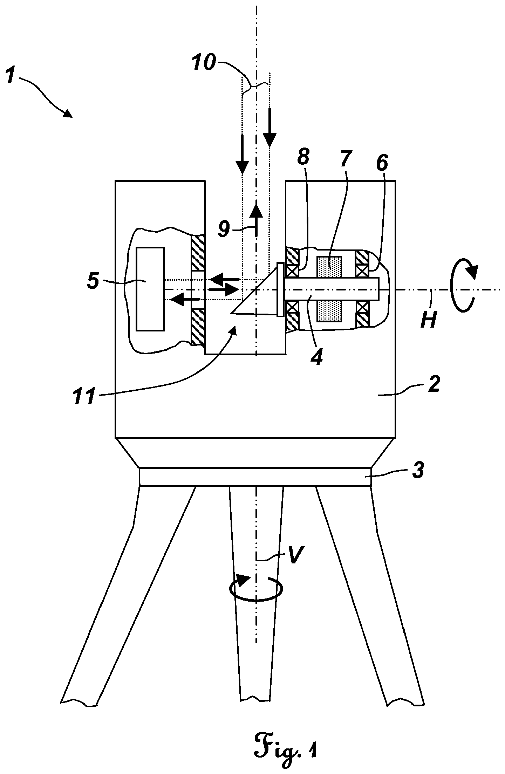

Figur 1 zeigt eine Ausführungsform eines erfindungsgemässen Vermessungsgerätes 1, namentlich einen Laserscanner mit einer schnell drehenden horizontalen Achse H zur Aussendung eines Laserstrahls und einer langsamen vertikalen Achse V zur azimuthalen 360°-Drehbarkeit einer Umgebung. Das Vermessungsgerät 1 weist ferner ein Gehäuse 2 auf, welches um die Basisachse V drehbar auf der Basis 3 gelagert ist, und eine Strahllenkeinheit 11, welche um die

Rotationsachse H drehbar mittels einer Welle 4 im Gehäuse 2 gelagert ist. Im Gehäuse 2 positioniert sind eine Strahlsende- und eine Strahlempfangseinheit, welche im gezeigten Beispiel in einer Einheit 5 zusammengefasst sind. Hier wird ein Sendestrahl 9 auf die Strahllenkeinheit 11 emittiert und über diesen in die Umgebung ausgesandt. Der reflektierte Empfangsstrahl 10 wird auf dieselbe Weise auf die Strahlempfangseinheit 5 zurückgelenkt. Zur Aussendung des Sendestrahls 9 aus dem Gehäuse 2 auf die Strahlumlenkeinheit 11 ist ein optisch offener Durchtrittsbereich im Gehäuse 2 vorgesehen, insbesondere in Form eines Fensters. Die radiale und axiale Lagerung der Welle 4 wird über die beiden Lager 6 und 8 realisiert und der Antrieb der Welle 4 durch die Positioniereinrichtung 7.

Das scannende Vermessungsgerät 1, hat also wenigstens eine Basis 3 zur Platzierung des Gerätes 1, ein auf der Basis 3 gelagertes Gehäuse 2, eine in dem Gehäuse 2 um eine Rotationsachse H drehbar gelagerte und eine Strahllenkeinheit 11 drehfest tragenden Welle 4, eine Strahlerzeugungseinheit 5, die einen Sendestrahl 9 erzeugt, welcher über die Strahllenkeinheit 11 in die Umgebung gesendet wird, eine Strahlempfangseinheit 5, die einen von der Umgebung reflektierten Empfangsstrahl 10 empfängt, einer ansteuerbaren, die Welle 4 antreibenden Positioniereinrichtung 7, wobei die Welle 4 durch wenigstens ein Paar von in O-Anordnung angestellten Schrägwälzlagern 6 und 8 gelagert ist, und die Schrägwälzlager 6 und 8 so auf der Welle 4 angeordnet sind, dass die Wälzlinien der einander zugeordneten Schrägwälzlager 6 und 8 sich im Wesentlichen auf der Rotationsachse H treffen.

Weiters weist der Treffpunkt der Wälzlinien einen Abstand zur Rotationsachse H auf, der höchstens 10%, insbesondere höchstens 5% des Lagerabstandes entspricht.

Die Welle 4 kann beispielsweise einseitig im Gehäuse 2 gelagert sein, wobei die Strahllenkeinheit 11 an einem Ende der Welle 4 angeordnet ist. Andererseits kann die Welle 4 auch beidseitig im Gehäuse 2 gelagert sein, wobei dann die Strahllenkeinheit 11 bezüglich der Lagerung zwischengeordnet an oder in der Welle angeordnet ist.

Die Wälzlinie ist senkrecht zur Drucklinie und verläuft durch den Wälzkörper, im Besonderen durch den Wälzkörpermittelpunkt, den Kontaktbereich des Wälzkörpers mit dem Lageraussenring, oder den Kontaktbereich des Wälzkörpers mit dem Lagerinnenring.

Die Schrägwälzlager können hierbei Schrägkugellager, insbesondere Spindellager, und/oder Kegelrollenlager sein. Auch können die Schrägwälzlager entweder den gleichen oder unterschiedliche Lagerrollkreisdurchmesser aufweisen. Weiters können die Schrägwälzlager entweder gleiche oder auch unterschiedliche Druckwinkel besitzen. Diese Druckwinkel betragen zwischen 15° und 30°, insbesondere 25°

Die Lagerinnenringe der Schrägwälzlager können mit der Welle 4 und/oder die Lageraussenringe der Schrägwälzlager mit einer mit dem Gehäuse 2 im Verbund stehenden Komponente oder dem Gehäuse 2 selbst verklebt, verlötet oder verklemmt werden.

Die Strahllenkeinheit 11 weist eine Strahlenoptik, insbesondere einen Spiegel auf zum Umlenken des von der Strahlerzeugungseinheit 5 kommenden Sendestrahls 9 aus dem Gehäuse 2, und des aus der Umgebung kommenden Empfangsstrahls 10 zur Strahlempfangseinheit 5.

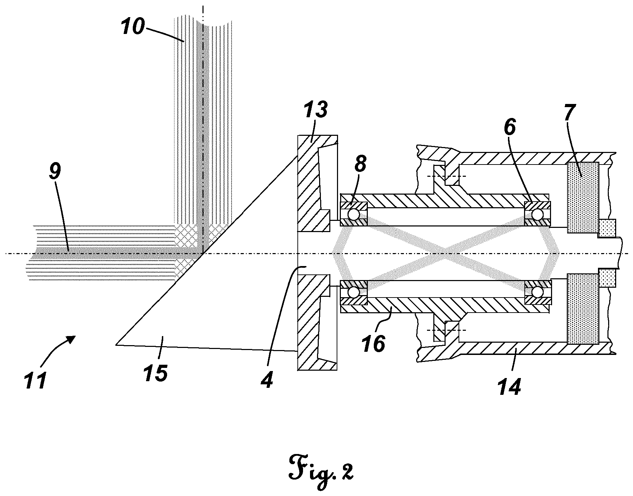

Figur 2 zeigt eine Schnittdarstellung der Strahllenkeinheit 11 und deren Lagerung über die Welle 4. Die Strahllenkeinheit 11 besteht im Wesentlichen aus einer Strahlenoptik 15, welche an einem Halter 13 fixiert ist, wobei die Strahllenkeinheit 11 zum Massenausgleich noch weitere, nicht dargestellte Elemente aufweisen kann. Über die Strahlenoptik 15, welche insbesondere ein Spiegel ist, werden sowohl der Sendestrahl 9, als auch der Empfangsstrahl 10 umgelenkt. Der Sendestrahl 9 kann somit aus dem Vermessungsgerät 1 austreten, sowie der Empfangsstrahl 10 in eben dieses eintreten. Der Halter 13 ist wiederum mit der Welle 4 verbunden, die von der Antriebseinheit 7 motorisiert wird. Die Lagerung der Welle 4 erfolgt über die in O-Stellung angeordneten Schrägkugellager 6 und 8, deren Aussenringe in einen Lagerbock 16 eingepasst sind. Der Lagerbock 16 ist wiederum am Gehäusekorpus 14 fixiert. Diese Fest-fest-Lagerung zeichnet sich dadurch aus, dass ihre Wälzlinien sich im Wesentlichen in einem Punkt auf der Rotationsachse H treffen. Die Verspannung der Lager kann z.B. mit Hilfe von Hülsen, Muttern und/oder einem Kleb- oder Lötstoff fixiert bzw. "eingefroren" werden.

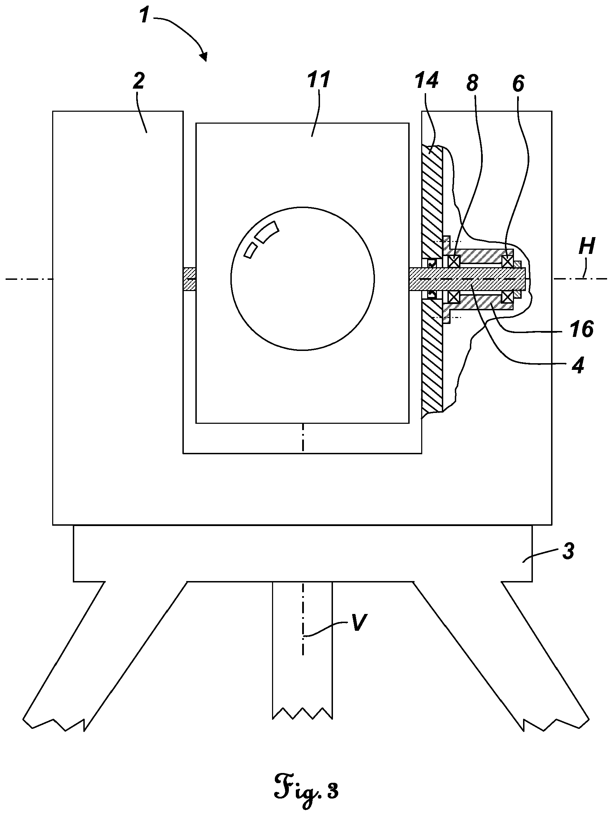

Figur 3 zeigt ein weiteres Ausführungsbeispiel der Erfindung in einer scannenden Totalstation 1. Die Strahllenkeinheit 11 ist zwischen Schenkeln des Gehäuses 2 mittels der Welle 4 gelagert. Die Welle 4 ist damit schnell rotierbar um die horizontale Rotationsachse H. Die erfindungsgemässe Lagerung ist dabei in mindestens einem Schenkel des Gehäuses 2 realisiert.

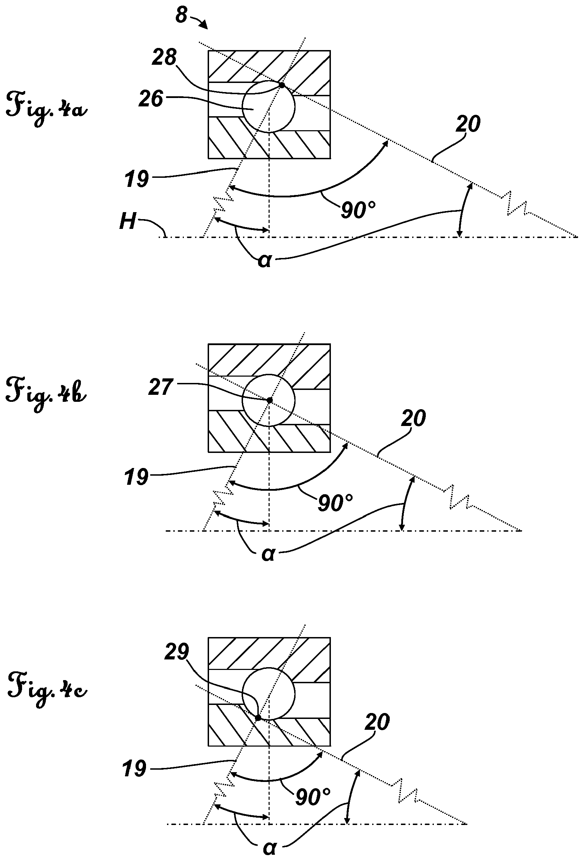

Figur 4a zeigt den Schnitt durch ein Schrägkugellager 8 ("oben links"). Hier ist der Druckwinkel α gezeigt, welcher die Kraftwirkungsrichtung des Lagers anzeigt. Er wird von der Drucklinie 19 und der Mittellinie des Lagers eingeschlossen, welche durch den Kugelmittelpunkt und senkrecht zur Rotationsachse H verläuft. Die Drucklinie 19 ist so definiert, dass sie durch die beiden Kontaktpunkte verläuft, die die Kugel mit den beiden Lagerringen (aussen und innen) aufweist. Im 90°-Winkel zur Drucklinie 19 verdreht befindet sich die durch den Kontaktbereich 28 zwischen Lagerkugel 26 und Lageraussenring laufende Wälzlinie 20. Zwischen dieser Wälzlinie 20 und der Rotationsachse H kann wiederum der Winkel α gemessen werden.

Figur 4b zeigt den Schnitt aus Figur 4a mit dem Unterschied, dass die Wälzlinie 20 durch den Mittelpunkt 27 der Lagerkugel 26 verläuft.

Figur 4c zeigt den Schnitt aus Figur 4a mit dem Unterschied, dass die Wälzlinie 20 durch den Kontaktbereich 29 zwischen Lagerkugel 26 und Lagerinnenring 29 verläuft.

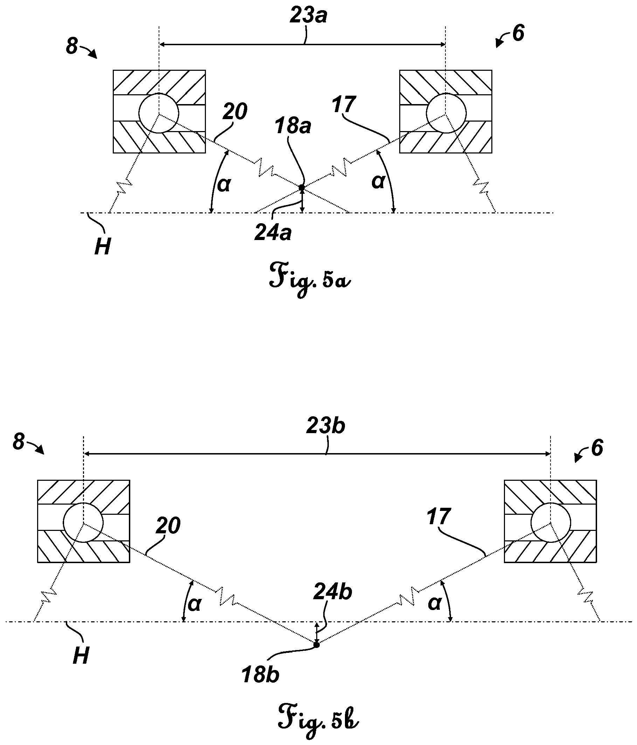

Figur 5a zeigt in teilweise verkürzten Dimensionen (zickzack-Symbole an den Linien) die Drucklinien und die Wälzlinien zweier einander zugeordneter Schrägkugellager, wobei in Hinsicht auf die Rotationsachse H nur die "obere" Symmetrie-Hälfte gezeigt ist. Hier ist der Treffpunkt 18a der Wälzlinien 20 und 17 ersichtlich, welcher sich aufgrund eines zu nahen Abstandes 23a der beiden Lager 8 und 6 noch oberhalb der Symmetrieachse (Rotationsachse H) befindet. Damit ergibt sich ein Abstand 24a zwischen Treffpunkt 18a der Wälzlinien 20 und 17 einerseits und der Rotationsachse H andererseits.

Figur 5b zeigt die Konfiguration aus Figur 5a mit dem Unterschied, dass der Lagerabstand 23b nun so gross ist, dass der Treffpunkt 18b der Wälzlinien 20 und 17 unterhalb der Rotationsachse H liegt. Dadurch ergibt sich ein Abstand 24b zwischen dem Treffpunkt 18b und der Rotationsachse H.

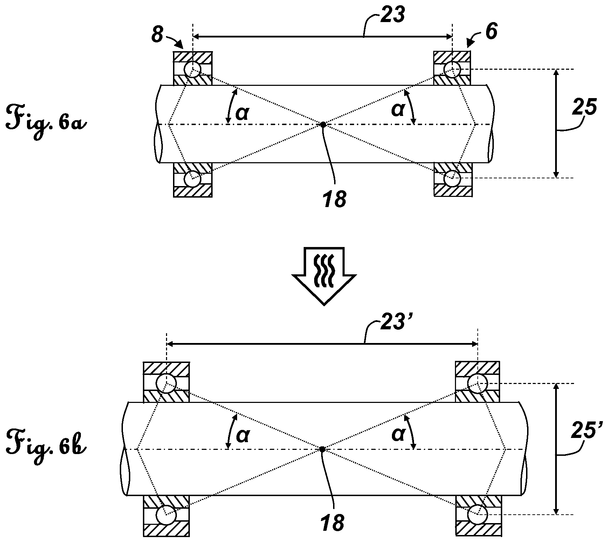

Erfindungsgemäss sind die Abstände 24a und 24b betraglich kleiner oder gleich 10% des jeweiligen Lagerabstandes 23a bzw. 23b und bevorzugterweise sind sie nahe null, womit die Treffpunkte 18a bzw. 18b auf der Rotationsachse H liegen.Figuren 6a und 6b veranschaulichen schematisch, wie sich das Lagersystem im Falle einer Temperaturerhöhung aufweitet. Die Lager 6 und 8 entfernen sich axial (Lagerabstand 23 -> 23') von einander und weiten sich auch radial auf (Lagerrollkreisdurchmesser 25 -> 25'). Dies geschieht durch die erfindungsgemässe Lageranordnung in einem solchen Verhältnis, dass der Treffpunkt 18 der Wälzlinien ortsfest auf der Welle gleich bleibt.

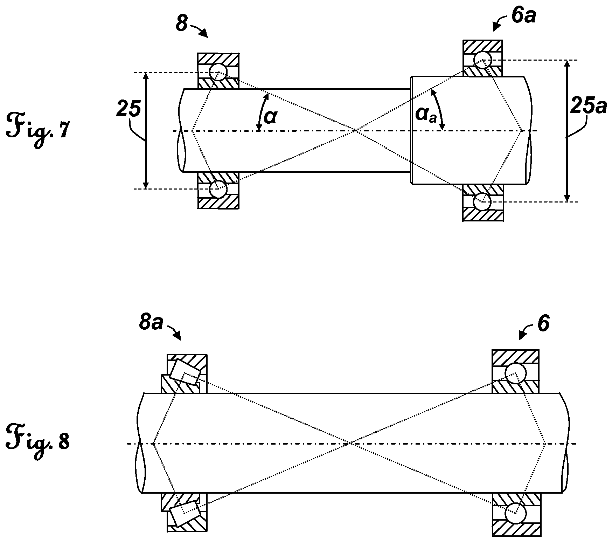

Figur 7 zeigt die erfindungsgemässe Möglichkeit, Lager mit unterschiedlichen Durchmessern sowie mit unterschiedlichen Druckwinkeln miteinander zu kombinieren. Lager 6a hat einen grösseren Lagerrollkreisdurchmesser 25a sowie einen grösseren Druckwinkel αₐ als Lager 8.

Figur 8 zeigt die erfindungsgemässe Möglichkeit, Schrägwälzlager unterschiedlicher Bauform miteinander zu kombinieren. Lager 8a ist ein Schrägrollenlager, welches in der erfindungsgemässen Anordnung zu Lager 6 steht.

Es versteht sich, dass die vorangehend gezeigten und erklärten Figuren nur mögliche Ausführungsbeispiele schematisch darstellen. Der Einsatz der thermisch neutralen Lagerung kann in einer nicht beanspruchten Variante der Erfindung ebenfalls an einer anderen Stelle in einem Vermessungsgerät stattfinden, insbesondere in einem Laserscanner, Profiler, Theodoliten, Rotationslaser, Nivelliergerät, wobei insbesondere Spiegel, Prismen, Kameras, Lichtquellen oder solche Komponenten tragende Bauteile gelagert werden. Auch wird darauf hingewiesen, dass die explizit dargestellten und erklärten Beispiele im Rahmen der nachfolgenden Ansprüche sowohl separat voneinander als auch in jeglicher Kombination miteinander einsetzbar sowie auch mit entsprechenden Vorrichtungen und Verfahren des Stands der Technik kombinierbar sind.

## Patentansprüche

1. Scannendes Vermessungsgerät (1), insbesondere, Laserscanner, Profiler, Totalstation oder Tracker, mit wenigstens
• einer Basis (3) zur Platzierung des Gerätes (1),
• einem auf der Basis (3) gelagerten Gehäuse (2),
• einer in dem Gehäuse (2) um eine Rotationsachse (H) drehbar gelagerten und eine Strahllenkeinheit (11) drehfest tragenden Welle (4),
• einer Strahlerzeugungseinheit (5), die einen Sendestrahl (9) erzeugt, welcher über die Strahllenkeinheit (11) in die Umgebung gesendet wird,
• einer Strahlempfangseinheit (5), die einen von der Umgebung reflektierten Empfangsstrahl (10) empfängt,
• einer ansteuerbaren, die Welle (4) antreibenden Positioniereinrichtung (7),
wobei die Welle (4) durch wenigstens ein Paar von in O-Anordnung angestellten Schrägwälzlagern (6,6a,8,8a) gelagert ist,
**dadurch gekennzeichnet, dass**
die Schrägwälzlager (6,6a,8,8a) so auf der Welle (4) angeordnet sind, dass die Wälzlinien (20,17) der einander zugeordneten Schrägwälzlager (6, 6a, 8, 8a) sich im Wesentlichen auf der Rotationsachse (H) treffen, wobei die Wälzlinie (20, 17) des jeweiligen Schrägwälzlagers (6,6a,8,8a) senkrecht zur Drucklinie (19) des jeweiligen Schrägwälzlagers (6,6a,8,8a) und durch den Wälzkörper (26) des jeweiligen Schrägwälzlagers (6, 6a, 8, 8a) verläuft.

2. Vermessungsgerät (1) nach Anspruch 1,
**dadurch gekennzeichnet, dass**
der Treffpunkt (18,18a,18b) der Wälzlinien (20,17) einen Abstand (24,24a,24b) zur Rotationsachse (H) aufweist, der höchstens 10%, insbesondere höchstens 5% des Lagerabstandes (23,23a,23b,23') entspricht.

3. Vermessungsgerät (1) nach einem der Ansprüche 1 bis 2,
**dadurch gekennzeichnet, dass**
die Welle (4) einseitig im Gehäuse (2) gelagert ist, wobei die Strahllenkeinheit (11) an einem Ende der Welle (4) angeordnet ist.

4. Vermessungsgerät (1) nach einem der Ansprüche 1 bis 2, **dadurch gekennzeichnet, dass**
die Welle (4) beidseitig im Gehäuse (2) gelagert ist, wobei die Strahllenkeinheit (11) bezüglich der Lagerung zwischengeordnet an oder in der Welle (4) angeordnet ist.

5. Vermessungsgerät (1) nach einem der vorherigen Ansprüche,
**dadurch gekennzeichnet, dass**
die Wälzlinie (20) durch
• den Wälzkörpermittelpunkt (27),
• den Kontaktbereich (28) des Wälzkörpers (26) mit dem Lageraussenring, oder
• den Kontaktbereich (29) des Wälzkörpers (26) mit dem Lagerinnenring
verläuft.

6. Vermessungsgerät (1) nach einem der vorherigen Ansprüche,
**dadurch gekennzeichnet, dass**
die Schrägwälzlager (6,6a,8,8a)
• Schrägkugellager, insbesondere Spindellager, und/oder
• Kegelrollenlager
sind.

7. Vermessungsgerät (1) nach einem der vorherigen Ansprüche,
**dadurch gekennzeichnet, dass**
die Schrägwälzlager (6, 6a, 8, 8a) den gleichen Lagerrollkreisdurchmesser (25) aufweisen.

8. Vermessungsgerät (1) nach einem der Ansprüche 1 bis 6, **dadurch gekennzeichnet, dass** die Schrägwälzlager (6,6a,8,8a) unterschiedliche Lagerrollkreisdurchmesser (25,25a) aufweisen.

9. Vermessungsgerät (1) nach einem der vorherigen Ansprüche,
**dadurch gekennzeichnet, dass**
die Schrägwälzlager (6,6a,8,8a) den gleichen Druckwinkel (α) aufweisen.

10. Vermessungsgerät (1) nach einem der Ansprüche 1 bis 8,
**dadurch gekennzeichnet, dass**
die Schrägwälzlager (6,6a,8,8a) unterschiedliche Druckwinkel (α, αₐ) aufweisen.

11. Vermessungsgerät (1) nach einem der vorherigen Ansprüche,
**dadurch gekennzeichnet, dass**
die Schrägwälzlager (6,6a,8,8a) einen Druckwinkel (α, αₐ) von zwischen 15° und 30°, insbesondere von 25° aufweisen.

12. Vermessungsgerät (1) nach einem der vorherigen Ansprüche,
**dadurch gekennzeichnet, dass**
die Lagerinnenringe der Schrägwälzlager (6,6a,8,8a) mit der Welle (4) und/oder
die Lageraussenringe der Schrägwälzlager (6,6a,8,8a) mit einer mit dem Gehäuse (2) im Verbund stehenden Komponente (16) oder dem Gehäuse (2) selbst verklebt, verlötet oder verklemmt sind.

13. Vermessungsgerät (1) nach einem der vorherigen Ansprüche,
**dadurch gekennzeichnet, dass**
die Strahllenkeinheit (11) eine Strahlenoptik (15), insbesondere einen Spiegel, aufweist zum Umlenken
• des von der Strahlerzeugungseinheit (5) kommenden Sendestrahls 9 aus dem Gehäuse (2), und
• des aus der Umgebung kommenden Empfangsstrahls (10) zur Strahlempfangseinheit (5).

## Claims

1. A scanning measuring device (1), in particular a laser scanner, profiler, total station or tracker, comprising at least
• a base (3) for the placement of the device (1),
• a housing (2) mounted on the base (3),
• a shaft (4) mounted in the housing (2) such that it can rotate about an axis of rotation (H) and bearing a beam deflection unit (11) in a rotationally fixed manner,
• a beam generating unit (5), which generates a transmitted beam (9) which is transmitted into the environment by the beam deflection unit (11),
• a beam receiving unit (5), which receives a received beam (10) reflected from the environment,
• a controllable positioning means (7) which drives the shaft (4),
wherein the shaft (4) is supported by at least one pair of angular contact rolling bearings (6, 6a, 8, 8a) set in an O arrangement,
**characterized in that**
the angular contact rolling bearings (6, 6a, 8, 8a) are arranged on the shaft (4) such that the rolling contact lines (20, 17) of the associated angular contact rolling bearings (6, 6a, 8, 8a) meet substantially on the axis of rotation (H),
wherein the rolling contact line (20, 17) of the respective angular contact rolling bearing (6, 6a, 8, 8a) extends perpendicular to the contact pressure line (19) and through the rolling element (26) of the respective angular contact rolling bearing (6, 6a, 8, 8a).

2. The measuring device (1) as claimed in claim 1,
**characterized in that**
the meeting point (18, 18a, 18b) of the rolling contact lines (20, 17) has a spacing (24, 24a, 24b) with respect to the axis of rotation (H) which corresponds at most to 10%, in particular at most to 5%, of the bearing spacing (23, 23a, 23b, 23').

3. The measuring device (1) as claimed in one of claims 1 to 2,
**characterized in that**
the shaft (4) is mounted on one side in the housing (2), wherein the beam deflection unit (11) is arranged at one end of the shaft (4).

4. The measuring device (1) as claimed in one of claims 1 to 2,
**characterized in that**
the shaft (4) is mounted on both sides in the housing (2), wherein the beam deflection unit (11) is arranged on or in the shaft (4) so as to be interposed with respect to the mounting.

5. The measuring device (1) as claimed in one of the preceding claims,
**characterized in that**
the rolling contact line (20) extends through
• the rolling element center (27),
• the contact region (28) of the rolling element (26) with the bearing outer ring, or
• the contact region (29) of the rolling element (26) with the bearing inner ring.

6. The measuring device (1) as claimed in one of the preceding claims,
**characterized in that**
the angular contact rolling bearings (6, 6a, 8, 8a) are
• angular contact ball bearings, in particular spindle bearings, and/or
• tapered roller bearings.

7. The measuring device (1) as claimed in one of the preceding claims,
**characterized in that**
the angular contact rolling bearings (6, 6a, 8, 8a) have the same bearing rolling circle diameter (25).

8. The measuring device (1) as claimed in one of claims 1 to 6,
**characterized in that**
the angular contact rolling bearings (6, 6a, 8, 8a) have different bearing rolling circle diameters (25, 25a).

9. The measuring device (1) as claimed in one of the preceding claims,
**characterized in that**
the angular contact rolling bearings (6, 6a, 8, 8a) have the same contact pressure angle (a).

10. The measuring device (1) as claimed in one of claims 1 to 8,
**characterized in that**
the angular contact rolling bearings (6, 6a, 8, 8a) have different contact pressure angles (α, αₐ).

11. The measuring device (1) as claimed in one of the preceding claims,
**characterized in that**
the angular contact rolling bearings (6, 6a, 8, 8a) have a contact pressure angle (a, aa) of between 15° and 30°, in particular of 25°.

12. The measuring device (1) as claimed in one of the preceding claims,
**characterized in that**
the bearing inner rings of the angular contact rolling bearings (6, 6a, 8, 8a) are adhesively bonded, brazed or clamped to the shaft (4) and/or
the bearing outer rings of the angular contact rolling bearings (6, 6a, 8, 8a) are adhesively bonded, brazed or clamped to a component (16) combined with the housing (2) or to the housing (2) itself.

13. The measuring device (1) as claimed in one of the preceding claims,
**characterized in that**
the beam deflection unit (11) has a beam optical unit (15), in particular a mirror, for deflecting
• the transmitted beam 9 coming from the beam generating unit (5) out of the housing (2), and
• the received beam (10) coming from the environment to the beam receiving unit (5).

## Revendications

1. Appareil d'arpentage à balayage (1), en particulier scanner laser, profileur, station totale ou tracker, présentant au moins
• une base (3) pour placer l'appareil (1),
• un boîtier (2) monté sur la base (3),
• un arbre (4) qui est monté dans le boîtier (2) de manière à pouvoir tourner autour d'un axe de rotation (H) et qui porte une unité de déviation de faisceau (11) de manière fixe en rotation,
• une unité de génération de faisceau (5) qui génère un faisceau d'émission (9) qui est émis dans l'environnement par l'intermédiaire de l'unité de déviation de faisceau (11),
• une unité de réception de faisceau (5) qui reçoit un faisceau de réception (10) réfléchi par l'environnement,
• un dispositif de positionnement commandable (7) qui entraîne l'arbre (4),
dans lequel l'arbre (4) est supporté par au moins une paire de roulements à contact oblique (6, 6a, 8, 8a) disposés en O,
**caractérisé en ce que**
les roulements à contact oblique (6, 6a, 8, 8a) sont disposés sur l'arbre (4) de telle sorte que les lignes primitives (20, 17) des roulements à contact oblique associés (6, 6a, 8, 8a) se rencontrent sensiblement sur l'axe de rotation (H), la ligne primitive (20, 17) du roulement à contact oblique respectif (6, 6a, 8, 8a) s'étendant perpendiculairement à la ligne de contact (19) du roulement à contact oblique respectif (6, 6a, 8, 8a) et à travers le corps roulant (26) du roulement à contact oblique respectif (6, 6a, 8, 8a).

2. Appareil d'arpentage (1) selon la revendication 1,
**caractérisé en ce que**
le point de rencontre (18, 18a, 18b) des lignes primitives (20, 17) présente une distance (24, 24a, 24b) par rapport à l'axe de rotation (H) qui correspond à au plus 10 %, en particulier au plus 5 %, de la distance entre roulements (23, 23a, 23b, 23').

3. Appareil d'arpentage (1) selon l'une des revendications 1 à 2,
**caractérisé en ce que**
l'arbre (4) est monté d'un côté dans le boîtier (2), l'unité de déviation de faisceau (11) étant disposée à une extrémité de l'arbre (4).

4. Appareil d'arpentage (1) selon l'une des revendications 1 à 2,
**caractérisé en ce que**
l'arbre (4) est monté des deux côtés dans le boîtier (2), l'unité de déviation de faisceau (11) étant disposée sur ou dans l'arbre (4) de manière intermédiaire par rapport au montage.

5. Appareil d'arpentage (1) selon l'une des revendications précédentes,
**caractérisé en ce que**
la ligne primitive (20) passe par
• le centre de corps roulant (27),
• la zone de contact (28) du corps roulant (26) avec la bague extérieure de roulement ou
• la zone de contact (29) du corps roulant (26) avec la bague intérieure de roulement.

6. Appareil d'arpentage (1) selon l'une des revendications précédentes,
**caractérisé en ce que**
les roulements à contact oblique (6, 6a, 8, 8a) sont
• des roulement à billes à contact oblique, en particulier des roulements de broche et/ou
• des roulements à rouleaux coniques.

7. Appareil d'arpentage (1) selon l'une des revendications précédentes,
**caractérisé en ce que**
les roulements à contact oblique (6, 6a, 8, 8a) présentent le même diamètre de cercle primitif (25).

8. Appareil d'arpentage (1) selon l'une des revendications 1 à 6,
**caractérisé en ce que**
les roulements à contact oblique (6, 6a, 8, 8a) présentent des diamètres de cercle primitif (25, 25a) différents.

9. Appareil d'arpentage (1) selon l'une des revendications précédentes,
**caractérisé en ce que**
les roulements à contact oblique (6, 6a, 8, 8a) présentent le même angle de contact (a).

10. Appareil d'arpentage (1) selon l'une des revendications 1 à 8,
**caractérisé en ce que**
les roulements à contact oblique (6, 6a, 8, 8a) présentent des angles de contact (a, αₐ) différents.

11. Appareil d'arpentage (1) selon l'une des revendications précédentes,
**caractérisé en ce que**
les roulements à contact oblique (6, 6a, 8, 8a) présentent un angle de contact (a, αₐ) compris entre 15° et 30°, en particulier de 25°.

12. Appareil d'arpentage (1) selon l'une des revendications précédentes,
**caractérisé en ce que**
les bagues intérieures des roulements à contact oblique (6, 6a, 8, 8a) sont collées, soudées ou serrées sur l'arbre (4) et/ou les bagues extérieures des roulements à contact oblique (6, 6a, 8, 8a) sont collées, soudées ou serrées sur un composant (16) lié au boîtier (2) ou sur le boîtier (2) lui-même.

13. Appareil d'arpentage (1) selon l'une des revendications précédentes,
**caractérisé en ce que**
l'unité de déviation de faisceau (11) présente un système d'optique géométrique (15), en particulier un miroir, pour dévier
• le faisceau d'émission 9 provenant de l'unité de génération de faisceau (5) hors du boîtier (2) et
• le faisceau de réception (10) provenant de l'environnement vers l'unité de réception de faisceau (5).
